# DEMANDE DE BREVET EUROPEEN

(11) **EP 3 051 375 A1**
(43) Date de publication de la demande: **03.08.2016**
(21) Numéro de dépôt: 16151645.5
(22) Date de dépôt: 18.01.2016
(51) Int. Cl.: G05D 1/00

(54) **PROCÉDÉ D'EXPLOITATION D'UN ENGIN, TEL QUE NOTAMMENT UN DRONE ET DISPOSITIF POUR SA MISE EN OEUVRE**

(30) Priorité: 20.01.2015 FR 1550422
(71) Demandeur: EZNOV, 57070 Metz (FR)
(72) Inventeur: LAURENT, Eric, 78120 Rambouillet (FR); LEGRAND, Thomas, 57000 Metz (FR)
(74) Mandataire: Hugues, Catherine

(57) **Abrégé**

La présente invention concerne un procédé d'exploitation d'un engin (1), tel que notamment un drone (1), destiné à être envoyé en mission au sein d'un espace géographique à couvrir, ledit procédé comportant une étape de détermination de la trajectoire à parcourir par ledit engin (1) au cours de sa mission, et une étape de pilotage automatique dudit engin (1), dans lequel:
- pour le réaliser on utilise un appareil mobile (2) comportant un écran tactile (3) et un clavier, apte à échanger des données avec un module électronique (4) dudit engin (1),
- on fournit audit appareil mobile (2) des paramètres relatifs à l'espace géographique à couvrir,
- on déclenche ladite étape de pilotage par le fait de disposer ledit appareil mobile (2) dans un logement dédié que comporte ledit engin (1) ce qui permet d'établir une connexion entre ledit appareil mobile (2) et le module électronique (4) dudit engin (1).

Il est caractérisé en ce qu'on réalise l'étape de pilotage au moyen dudit module électronique qui définit l'ensemble des paramètres de ladite trajectoire à parcourir par ledit engin, après un échange de données, incluant la transmission des paramètres relatifs à l'espace géographique à couvrir, entre ledit appareil mobile (2) embarqué à bord dudit engin (1) et ledit module électronique (4) dudit engin (1)

L'invention concerne également un dispositif pour la mise en oeuvre d'un tel procédé.

## Description

La présente invention a pour objet un procédé d'exploitation d'un engin, tel que notamment un drone, destiné à être envoyé en mission au sein d'un espace géographique à couvrir, ledit procédé comportant une étape de détermination de la trajectoire à parcourir par ledit engin au cours de sa mission dans laquelle on définit les paramètres de ladite trajectoire, et une étape de pilotage automatique dudit engin dans laquelle on utilise notamment les paramètres de ladite trajectoire pour permettre audit engin d'accomplir ladite mission. L'invention concerne par ailleurs un dispositif pour la mise en oeuvre d'un tel dispositif.

L'exploitation d'engins tels que des drones représente une activité en progression exponentielle à l'heure actuelle. Principalement dédiés à des fins militaires au départ, ces appareils s'imposent à présent également dans le domaine civil. Ainsi, pas moins de deux cent nouvelles applications ont été décrites en trois ans et les usages pouvant être envisagés apparaissent sans limites.

A titre d'exemple, le secteur de l'agriculture de précision, dans lequel la mise en oeuvre de drones présente un intérêt par exemple pour surveiller les cultures et répartir les pesticides, correspond à un marché particulièrement prometteur. L'utilisation de drones se banalise également dans le domaine de la sécurité publique, notamment pour aider les forces de l'ordre ou les pompiers sur les scènes de crime ou d'incendie, ou encore pour surveiller les frontières.

D'autres marchés, moins développés mais également très prometteurs, sont encore représentés par exemple par le domaine de l'immobilier, du génie civil ou du sauvetage en montagne.

Ainsi, ce secteur fait actuellement l'objet de nombreux travaux de développement pour proposer des engins parfaitement adaptés à l'application envisagée. Parmi l'abondante littérature disponible à ce sujet, on trouve par exemple le document US 2014/0297067 qui traite d'un drone destiné à être utilisé dans le secteur du commerce, et qui présente la particularité d'être contrôlé au moyen d'un smartphone embarqué comportant un logiciel de pilotage, ledit smartphone étant équipé de l'ensemble des capteurs tels que gyroscope, accéléromètre, magnétomètre, etc., nécessaires à ce pilotage.

Néanmoins, bien que de nombreuses innovations aient été réalisées ces dernières années en vue d'adapter les engins de types drones aux différentes applications civiles considérées, de nombreux inconvénients, apparaissant comme un frein à leur développement subsistent encore. En particulier, la mise en oeuvre des engins disponibles sur le marché actuellement se révèle compliquée et fastidieuse, aussi bien en amont d'une mission pour sa préparation, qu'en aval pour exploiter les données recueillies. De plus, les engins connus se caractérisent par une différenciation produit invisible, une expérience utilisateur identique et leurs prix se révèlent généralement dissuasifs.

La présente invention a pour but de pallier ces différents inconvénients en proposant une solution combinant à la fois sophistication technologique, simplicité d'usage et prix abordable.

Le but de la présente invention est ainsi de conférer à un engin de type drone une simplicité d'usage telle qu'elle en permet aussi, si nécessaire, une mise en oeuvre spontanée et immédiate, ne nécessitant aucune connexion, qu'elle soit filaire ou non, à un réseau de communication de type Internet.

L'invention a également pour objectif de permettre une utilisation intuitive dudit engin, ne nécessitant aucune formation ou phase d'entraînement préalable.

Par ailleurs, l'invention entend également proposer une solution offrant, pour toutes les missions photographiques, topographiques, de diagnostic ou d'inspection, une possibilité d'accès immédiat, c'est-à-dire dès l'atterrissage de l'engin, voire en cours de mission de ce dernier, à des résultats par exemple photographiques, de nature particulièrement précise et détaillée.

A cet effet, l'invention a pour objet un procédé du genre indiqué en préambule, caractérisé en ce que:
- pour le réaliser on utilise un appareil mobile tel que notamment un smartphone, comportant un écran tactile et un clavier, apte à échanger des données avec un module électronique dudit engin,
- on fournit audit appareil mobile des paramètres relatifs à l'espace géographique à couvrir,
- on déclenche ladite étape de pilotage par le fait de disposer ledit appareil mobile dans un logement dédié que comporte ledit engin, ce qui permet d'établir une connexion entre ledit appareil mobile et le module électronique dudit engin,
- on réalise l'étape de pilotage par un échange de données entre ledit appareil mobile embarqué à bord dudit engin et ledit module électronique dudit engin, ledit échange de données incluant la transmission des paramètres relatifs à l'espace géographique à couvrir dudit appareil mobile vers ledit module électronique qui définit alors les paramètres de ladite trajectoire à parcourir par ledit engin.

Un tel procédé permet avantageusement une grande simplicité d'usage, notamment du fait de la possibilité de programmation du plan de vol de l'engin directement au moyen de l'appareil mobile, connecté ou non à Internet, de manière intuitive par le biais de son écran tactile.

Par ailleurs, le décollage de l'engin et le démarrage de la mission sont réalisés automatiquement par le simple fait de placer l'appareil mobile à bord dudit engin, ce qui représente un avantage indéniable non seulement en termes de réactivité mais également en termes de simplicité de mise en oeuvre du dispositif. En effet, contrairement aux dispositifs classiques, aucune connexion par câble n'est nécessaire. Une fois la connexion établie entre le module électronique de l'engin et l'appareil mobile, il suffit à l'opérateur de valider le démarrage de la mission, par exemple en actionnant une télécommande. L'engin vérifie, au moyen de capteurs de proximité, qu'il n'y a aucun danger à proximité, puis décolle pour sa mission après avoir calculé automatiquement la meilleure trajectoire à partir des paramètres relatifs à l'espace géographique à couvrir transmises par l'appareil mobile.

Conformément à une première variante de mise en oeuvre du procédé selon l'invention, pour fournir audit appareil mobile les paramètres relatifs à l'espace géographique à couvrir, on télécharge sur ledit appareil mobile une représentation telle qu'un plan géographique englobant l'espace géographique considéré, on affiche ladite représentation sur l'écran tactile dudit appareil mobile, on délimite ledit espace considéré sur ladite représentation en dessinant avec son doigt sur ledit écran tactile, et on introduit dans ledit appareil mobile des données relatives à l'altitude.

Selon une autre variante de mise en oeuvre du présent procédé, pour fournir audit appareil mobile les paramètres relatifs à l'espace géographique à couvrir, on pointe ledit appareil mobile vers les directions souhaitées, une fois sur le terrain, de sorte à relever les données relatives auxdites directions, on enregistre les données relatives aux directions puis on introduit dans ledit appareil mobile des données relatives à l'altitude à atteindre par ledit engin et des données relatives aux distances à parcourir par ledit engin.

Une autre variante de mise en oeuvre du présent procédé prévoit encore la possibilité, pour fournir audit appareil mobile les paramètres relatifs à l'espace géographique à couvrir, d'envoyer ledit engin, préalablement au démarrage de la mission, à une altitude donnée, d'effectuer une photographie globale de la zone survolée à l'aide de moyens de prises de vues intégrés audit appareil mobile, de récupérer ledit engin, puis de délimiter ledit espace considéré sur la vue effectuée affichée sur l'écran tactile dudit appareil mobile en le dessinant avec son doigt.

Une telle manière de procéder permet avantageusement de s'affranchir de toute obligation fastidieuse de programmation préméditée de la trajectoire de l'engin au moyen de systèmes informatiques dédiés nécessitant de manière classique une connexion à Internet. Ainsi, cette caractéristique du présent procédé permet par exemple une planification d'une trajectoire à l'improviste, et donc une mise en oeuvre d'un engin tel qu'un drone sur un mode « in situ » au gré des circonstances, si nécessaire.

Le présent procédé prévoit par ailleurs la possibilité, après avoir fourni audit appareil mobile les paramètres relatifs à l'espace géographique à couvrir, d'introduire dans ledit appareil mobile des données relatives à des distances à respecter par ledit engin par rapport à au moins un élément dudit espace géographique et des données relatives à l'angle d'inclinaison à adopter par ledit engin par rapport audit élément.

Ceci permet avantageusement la possibilité d'effectuer des prises de vues panoramiques d'un élément tel que notamment un lieu, un objet, un bâtiment ou tout autre élément architectural tel que par exemple un pont. Pour ce faire, grâce à la mise en oeuvre du procédé selon l'invention, l'engin pourra effectuer un vol circulaire, une orbite, autour de ce lieu, objet, bâtiment ou autre élément architectural dont il prendra plusieurs photographies. Pour chaque cliché, l'engin prendra automatiquement une attitude permettant une prise de vue sous un certain angle, par exemple à 45 degrés. L'utilisateur pourra définir tactilement sur l'écran de l'appareil mobile la position de l'élément à photographier de manière panoramique, l'altitude de prise de vue et la distance séparant l'engin durant le vol et l'élément à photographier (rayon de l'orbite).

Une autre caractéristique du présent procédé est encore définie par le fait qu'au cours de ladite mission dudit engin on réalise des prises de vues dudit espace géographique en utilisant des moyens de prises de vues intégrés audit appareil mobile.

D'autre part, le procédé selon l'invention prévoit également qu'au cours de ladite mission dudit engin on vérifie les éléments constitutifs dudit engin et on remédie en temps réel à toute éventuelle anomalie fonctionnelle détectée au moyen dudit module électronique.

Une caractéristique additionnelle du présent procédé est encore définie par le fait qu'au cours de ladite mission dudit engin on communique avec ledit appareil mobile embarqué en utilisant comme canal de communication les réseaux publics de communications téléphoniques.

L'invention concerne également un dispositif pour la mise en oeuvre du procédé tel que préalablement décrit, caractérisé en ce qu'il comporte un appareil mobile tel que notamment un smartphone destiné à être embarqué dans ledit engin et un module électronique intégré audit engin, ledit appareil mobile et ledit module électronique étant aptes à échanger entre eux des données en utilisant un protocole de communication sans fil.

De préférence, le protocole de communication sans fil utilisé est de type « en champs proche ».

Selon une caractéristique avantageuse du dispositif selon l'invention, ledit module électronique comporte des moyens de diagnostic et de réparation en temps réel des éléments constitutifs dudit engin.

Conformément à une caractéristique additionnelle dudit dispositif, ledit module électronique comporte des capteurs aptes à lui permettre de s'orienter dans l'espace et à s'adapter à son environnement.

La présente invention sera mieux comprise à la lecture de la description d'un exemple de réalisation faite en référence aux figures annexées, dans lesquelles :
- La figure 1 correspond à un schéma illustrant l'étape de détermination de la trajectoire à accomplir par un drone au cours de sa mission,
- La figure 2 correspond à un schéma illustrant l'étape de pilotage du drone en cours de mission, et
- La figure 3 correspond à un schéma illustrant l'analyse des prises de vues effectuées par un drone au cours de sa mission.

En référence aux figures, la présente invention a pour objet un procédé d'exploitation d'un engin, tel que notamment un drone 1, destiné à être envoyé en mission au sein d'un espace géographique.

De manière classique, une telle mission peut consister pour le drone 1, à atteindre puis à survoler une zone géographique présentant un intérêt particulier, en vue de réaliser des prises de vues photographiques de ladite zone.

Afin qu'une telle mission puisse être accomplie par le drone 1, il est indispensable de programmer au préalable son plan de vol, c'est à dire de définir et d'enregistrer les différents paramètres de la trajectoire à accomplir, notamment en termes de direction, de distances, d'altitude et de durées, en vue de garantir une parfaite exhaustivité des clichés effectués en cours de mission par le drone 1.

Les paramètres de la trajectoire définissant le plan de vol sont utilisés en cours de mission pour piloter le drone 1 le long de la trajectoire qu'il est supposé suivre au-dessus de la zone survolée.

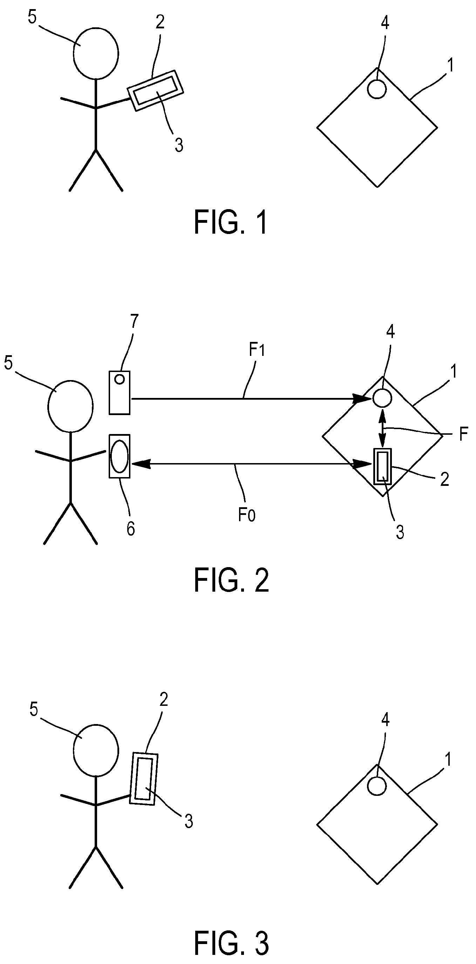

En référence aux figures 1 et 2, et conformément au procédé d'exploitation du drone 1 selon la présente invention, la programmation du plan de vol du drone 1 ainsi que son pilotage sont effectués au moyen d'un appareil portable, tel que notamment un smartphone 2 comportant un écran tactile 3 et un clavier (non illustré), et apte à échanger des données avec un module électronique 4 intégré au drone 1, de préférence, mais non exclusivement, au moyen d'un protocole de communication sans fil de type « en champs proche ».

Comme indiqué préalablement, l'étape de programmation du plan de vol comporte une étape dans laquelle on fournit au smartphone 2 des paramètres relatifs à la zone géographique à couvrir par le drone 1 qui peut s'effectuer de différentes manières selon que l'opérateur 5 dispose ou non d'une connexion, filaire ou non filaire, à Internet.

Dans le cas où une telle connexion est disponible, l'opérateur 5 peut à cet effet, télécharger dans un premier temps sur son smartphone 2, par exemple un plan géographique, ou une représentation d'un autre type, de la zone à survoler par le drone 1. En déplaçant ses doigts de manière appropriée sur l'écran tactile 3 du smartphone 2, l'opérateur 5 peut ensuite délimiter de manière très précise la zone à survoler par le drone 1, et exclure, le cas échéant, les zones interdites de survol. Afin de finaliser cette étape, l'opérateur 5 saisit ensuite, au moyen du clavier du smartphone 2, l'altitude à atteindre par le drone 1 au-dessus de la zone à survoler pendant la mission.

Dans le cas où aucune connexion à Internet n'est disponible, ou simplement dans le cas où l'opérateur 5 souhaite faire l'économie de câbles ou de tout matériel additionnel onéreux, l'étape dans laquelle on fournit au smartphone 2 des paramètres relatifs à la zone géographique à couvrir par le drone 1 au cours de sa mission s'effectue au moyen du seul smartphone 2. A cet effet, il suffit à l'opérateur 5, une fois sur le terrain, de pointer le smartphone 2 vers les directions dans lesquelles il souhaite envoyer le drone 1 afin de relever et d'enregistrer les coordonnées géographiques correspondantes. Puis l'opérateur règle tactilement l'altitude et/ou la résolution photographique dans le logiciel du smartphone 2, les distances à parcourir par le drone 1 et l'altitude qu'il doit atteindre au-dessus de la zone à survoler pendant sa mission.

Selon une autre possibilité, une fois sur le terrain, l'opérateur 5 peut envoyer le drone 1 à une altitude donnée pour réaliser avec le smartphone 2 hébergé par le drone 1 une prise de vue aérienne globale de la zone à survoler en cours de mission. L'opérateur 5 a ensuite la possibilité de délimiter avec ses doigts de manière très précise la zone à survoler par le drone 1, à partir de la photographie réalisée par le smartphone 2 et affichée sur son écran tactile 3. Il peut également exclure, si nécessaire, les zones interdites de survol. Comme pour les autres variantes, afin de finaliser cette étape préliminaire, l'opérateur 5 saisit ensuite, au moyen du clavier tactile du smartphone 2, ou au moyen d'une barre de progression, l'altitude à atteindre par le drone 1 au-dessus de la zone à survoler pendant la mission.

En référence à la figure 2, une fois les paramètres relatifs à la zone géographique à couvrir par le drone 1 fournis au smartphone 2, l'étape de pilotage et donc la mission du drone 1 est déclenchée par le seul fait de disposer le smartphone 2 dans un logement dédié (non illustré) que comporte le drone 1. La simple proximité entre le smartphone 1 et le module électronique 4 est suffisante pour permettre une connexion entre ces deux éléments. En fait, lorsque le smartphone 2 est disposé dans son logement, et qu'une connexion est établie entre le smartphone 2 et le module électronique 4, l'opérateur 5 peut valider le démarrage de la mission, par exemple par un simple appui sur un bouton d'une télécommande 7. Les paramètres relatifs à la zone géographique à couvrir par le drone 1 sont alors transmis par le smartphone 2 au module électronique 4 en utilisant le protocole de communication « en champs proche » mentionné ci-dessus (cf. flèche F, fig. 2). Le module électronique 4 calcule et optimise ensuite le plan de vol de sorte à couvrir intégralement et parfaitement la zone à photographier, tout en excluant les éventuelles zones interdites. Ainsi, le module électronique 4 gère l'intégralité des paramètres du vol du drone 1. Il en contrôle aussi bien le décollage et l'atterrissage, que la direction, l'altitude et la stabilité.

Par ailleurs, le module électronique 4 est équipé d'un certain nombre de capteurs, tels que notamment un ou plusieurs gyroscopes, accéléromètres, GPS, senseurs, etc., et est programmé pour interpréter le flux d'informations entre ces capteurs, les données transmises par le smartphone 2 et les parties structurelles du drone 1.

Ceci permet de prévoir qu'en cours de mission du drone 1 le module électronique 4 vérifie en temps réel l'ensemble de ses éléments constitutifs, les diagnostique et remédie, le cas échéant et si possible, à toute éventuelle anomalie fonctionnelle détectée.

Par ailleurs, le procédé selon l'invention prévoit également qu'en cours de mission, le smartphone 2 photographie et géo-référence les différents clichés effectués.

Le présent procédé prévoit également avantageusement la possibilité d'un échange d'informations (cf. flèche F0, fig. 2) entre le smartphone 2 embarqué et un smartphone 6 additionnel détenu par l'opérateur 5 en cours de mission du drone 1. Cet échange d'informations peut intervenir par exemple au travers d'un envoi de messages textes de type « short message service » (SMS) ou de type « multimédia messaging service » (MMS) en utilisant comme canal de communication les réseaux publics de communications téléphoniques. Ceci permet par exemple au smartphone 2 embarqué à bord du drone 1 d'envoyer en temps réel à l'opérateur 5 les différents clichés effectués pendant la mission. Ceci permet également une mise à jour et un contrôle du vol par l'opérateur 5 en cours de mission.

L'opérateur 5 peut également, de manière classique, interagir avec le module électronique 4 du drone 1 au moyen de la télécommande 7 permettant un transfert de données par ondes radio à hautes fréquences (cf. fig. 2, flèche F1), en vue par exemple d'écourter ou interrompre la mission en cours.

En référence à la figure 3, lorsque le drone 1 est de retour de sa mission, l'opérateur 5 récupère le smartphone 2 dans lequel les différents clichés effectués ont été enregistrés. Le smartphone 2 reconstitue également une image globale de la zone à photographier à partir des différentes photos qui ont été faites. Ces résultats de la mission sont alors consultables immédiatement sur l'écran 3 du smartphone 2. Le transfert des fichiers correspondants et leur archivage automatique sont par ailleurs possible indépendamment de tout câble.

Bien entendu, de nombreuses modifications peuvent être apportées aux exemples décrits ci-dessus sans sortir du cadre de la présente invention.

## Revendications

1. Procédé d'exploitation d'un engin (1), tel que notamment un drone (1), destiné à être envoyé en mission au sein d'un espace géographique à couvrir, ledit procédé comportant une étape de détermination de la trajectoire à parcourir par ledit engin (1) au cours de sa mission dans laquelle on définit les paramètres de ladite trajectoire, et une étape de pilotage automatique dudit engin dans laquelle on utilise notamment les paramètres de ladite trajectoire pour permettre audit engin (1) d'accomplir ladite mission, dans lequel :
- pour le réaliser on utilise un appareil mobile (2) tel que notamment un smartphone (2), comportant un écran tactile (3), apte à échanger des données avec un module électronique (4) dudit engin (1),
- on fournit audit appareil mobile (2) des paramètres relatifs à l'espace géographique à couvrir,
- on déclenche ladite étape de pilotage par le fait de disposer ledit appareil mobile (2) dans un logement dédié que comporte ledit engin (1) ce qui permet d'établir une connexion entre ledit appareil mobile (2) et le module électronique (4) dudit engin (1), **caractérisé en ce que** :
- on réalise l'étape de pilotage au moyen dudit module électronique qui définit l'ensemble des paramètres de ladite trajectoire à parcourir par ledit engin, après un échange de données, incluant la transmission des paramètres relatifs à l'espace géographique à couvrir, entre ledit appareil mobile (2) embarqué à bord dudit engin (1) et ledit module électronique (4) dudit engin (1).

2. Procédé selon la revendication 1, **caractérisé en ce que** pour fournir audit appareil mobile (2) les paramètres relatifs à l'espace géographique à couvrir, on télécharge sur ledit appareil mobile (2) une représentation telle qu'un plan géographique englobant l'espace géographique considéré, on affiche ladite représentation sur l'écran tactile (3) dudit appareil mobile (2), on délimite ledit espace considéré sur ladite représentation en le dessinant avec son doigt sur ledit écran tactile (3), et on introduit dans ledit appareil mobile (2) des données relatives à l'altitude.

3. Procédé selon la revendication 1, **caractérisé en ce que** pour fournir audit appareil mobile (2) les paramètres relatifs à l'espace géographique à couvrir, on pointe ledit appareil mobile (2) vers les directions souhaitées, une fois sur le terrain, de sorte à relever les données relatives auxdites directions, on enregistre les données relatives aux directions puis on introduit dans ledit appareil mobile (2) des données relatives à l'altitude à atteindre par ledit engin (1) et des données relatives aux distances à parcourir par ledit engin (1).

4. Procédé selon la revendication 1, **caractérisé en ce que** pour fournir audit appareil mobile (2) les paramètres relatifs à l'espace géographique à couvrir on envoie ledit engin (1), préalablement au démarrage de la mission, à une altitude donnée, on effectue une photographie globale de la zone survolée à l'aide de moyens de prises de vues intégrés audit appareil mobile (2), on récupère ledit engin (1), puis on délimite ledit espace considéré sur la photographie effectuée affichée sur l'écran tactile (3) dudit appareil mobile (2) en le dessinant avec le doigt directement sur ladite photographie.

5. Procédé selon l'une quelconque des revendications 2 à 4, **caractérisé en ce que** après avoir fourni audit appareil mobile (2) les paramètres relatifs à l'espace géographique à couvrir, on introduit dans ledit appareil mobile (2) des données relatives à des distances à respecter par ledit engin (1) par rapport à au moins un élément dudit espace géographique et des données relatives à l'angle d'inclinaison à adopter par ledit engin (1) par rapport audit élément.

6. Procédé selon l'une quelconque des revendications précédentes, **caractérisé en ce qu'**au cours de ladite mission dudit engin (1) on réalise des prises de vues dudit espace géographique en utilisant des moyens de prises de vues intégrés audit appareil mobile (2).

7. Procédé selon l'une quelconque des revendications précédentes, **caractérisé en ce qu'**au cours de ladite mission dudit engin (1) on réalise un diagnostic des éléments constitutifs dudit engin (1) au moyen du module électronique qui interprète des informations transmises par l'appareil mobile (2) et par des capteurs dont il est équipé et on remédie en temps réel à toute éventuelle anomalie fonctionnelle au moyen dudit module électronique (4).

8. Procédé selon l'une quelconque des revendications précédentes, **caractérisé en ce qu'**au cours de ladite mission dudit engin (1) on communique avec ledit appareil mobile (2) embarqué en utilisant comme canal de communication les réseaux publics de communications téléphoniques.

9. Dispositif pour la mise en oeuvre du procédé selon l'une quelconque des revendications 1 à 8, comportant un appareil mobile (2) tel que notamment un smartphone (2) destiné à être embarqué dans ledit engin (1) et un module électronique (4) intégré audit engin (1), ledit appareil mobile (2) et ledit module électronique (4) étant aptes à échanger entre eux des données en utilisant un protocole de communication sans fil, **caractérisé en ce que** ledit module électronique (4) comporte des capteurs aptes à lui permettre de s'orienter dans l'espace et à s'adapter à son environnement.

10. Dispositif selon la revendication 9, **caractérisé en ce que** le protocole de communication sans fil utilisé est de type « en champs proche ».

11. Dispositif selon l'une quelconque des revendications 9 ou 10, **caractérisé en ce que** ledit module électronique (4) comporte des moyens de diagnostic et de réparation en temps réel des éléments constitutifs dudit engin (1).
